# EUROPEAN PATENT SPECIFICATION

(11) **EP 3 407 114 B1**
(45) Date of publication and mention of the grant of the patent: **30.12.2020**
(21) Application number: 17741335.8
(22) Date of filing: 16.01.2017
(51) Int. Cl.: B60K 35/00, G02B 27/01

(54) **HEAD-UP DISPLAY DEVICE**
HEAD-UP-ANZEIGEVORRICHTUNG
DISPOSITIF D'AFFICHAGE TÊTE HAUTE

(30) Priority: 21.01.2016 JP 2016010159
(43) Date of publication of application: 28.11.2018
(73) Proprietor: Nippon Seiki Co., Ltd., Nagaoka-shi, Niigata 940-8580 (JP)
(72) Inventor: FURUSAWA,Hiroyuki, Niigata (JP); KOIKE,Shota, Niigata (JP)
(74) Representative: Carpmaels & Ransford LLP
(86) International application number: PCT/JP2017/001168
(87) International publication number: WO 2017/126457

(56) References cited:
- WO-A1-94/14098
- JP-A- H0 490 934
- JP-A- H11 278 100
- JP-A- 2005 289 098
- JP-A- 2009 067 352
- JP-A- 2012 058 690
- JP-A- 2014 074 802
- JP-A- 2014 115 408
- JP-A- 2015 049 290
- JP-A- 2016 000 591

## Description

### TECHNICAL FIELD

The present invention relates to a head-up display device including a light shielding part for preventing a washout phenomenon.

### BACKGROUND ART

Patent Literature 1 describes a conventional head-up display device. The head-up display device includes a light shielding part for preventing a phenomenon (washout phenomenon) in which a virtual image cannot be clearly seen as a result of sunlight (external light) entering a display (display unit) that emits display light.

### CITATION LIST

### PATENT LITERATURE

Patent Literature 1: Japanese Unexamined Patent Application Publication No. H11-278100
Patent Literature 2: JP 2014 115408 A
Patent Literature 3: JP 2015 049290 A
Patent Literature 4: JP 2014 074802 A
Patent Literature 5: JP 2009 067352 A

### SUMMARY OF THE INVENTION

### PROBLEMS TO BE SOLVED BY THE INVENTION

However, a bottom surface of the light shielding part for preventing a washout phenomenon is illuminated with scattered light of display light emitted from the display unit, and the shining light shielding part is displayed as a virtual image. This may impair a marketability of the head-up display device.

The present invention has been achieved in view of the above problem, and an object thereof is to provide a head-up display device that prevents a light shielding part for preventing a washout phenomenon from shinning.

### MEANS FOR SOLVING THE PROBLEMS

A head-up display device according to the present invention is a head-up display device including: a display unit for emitting display light, which is housed in a case; and a light shielding part that blocks a part of an opening part from which the display light is emitted, wherein a bottom surface of the light shielding part is formed with a strip-shaped protrusion part.

Further, it is preferable to configure so that the strip-shaped protrusion part of the head-up display device according to the present invention has a flat surface formed continuously with a top surface of the light shielding part.

Further, it is preferable that the strip-shaped protrusion part of the head-up display device according to the present invention is formed in plural, and
the plurality of strip-shaped protrusion parts are configured to be formed to increase in size as the plurality of strip-shaped protrusion parts are farther away from the display unit.

### EFFECT OF THE INVENTION

According to the present invention, it is possible to provide a head-up display device that prevents an anti-washout light shielding part from shining.

### BRIEF DESCRIPTION OF DRAWINGS

[Fig. 1] Fig. 1 is a perspective view of a head-up display device 10 which is an embodiment of the present invention.

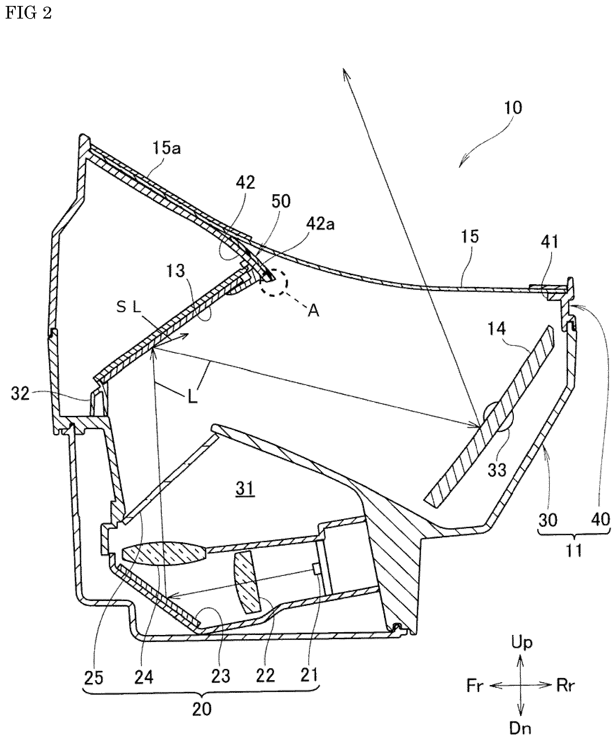

[Fig. 2] Fig. 2 is a cross-sectional view of the head-up display device 10 taken along line 2 - 2.
[Fig. 3] Fig. 3(a) to Fig. 3(d) are each enlarged views of a main portion A of the cross-sectional view of the head-up display device 10 taken along line 2-2.

### MODE FOR CARRYING OUT THE INVENTION

An embodiment of the present invention will be described based on the attached drawings, below. In the description, when left and right are mentioned, an occupant of a vehicle is used as a reference, and front and rear are mentioned, a traveling direction of the vehicle is used as a reference. Further, in the drawings, Fr denotes the front of the vehicle, Rr denotes the back of the vehicle, Le denotes left as viewed from the occupant, Ri denotes right as viewed from the occupant, Up denotes upward as viewed from the occupant, and Dn denotes downward as viewed from the occupant.

A head-up display device 10 which is an embodiment of the present invention is mounted on a vehicle, and displays a virtual image on a front windshield (windshield glass) of the vehicle. The occupant can view the virtual image at the front of the front windshield to view vehicle information (for example, a running speed and an engine speed of the vehicle) represented by the virtual image while viewing a scene at the front.

Inside a case 11 of the head-up display device 10, a display unit 20 that emits display light L representing the vehicle information is housed. Further, inside the case 11, a plane mirror 13 and a concave mirror 14 that reflect the display light L are mounted. A top of the case 11 is formed with an opening, and the opening is covered with a translucent cover 15 made of a film-like translucent resin.

In the case 11, an upper case 40 is placed over a lower case 30.

The display unit 20 includes a backlight 21 made of LED, a first lens 22 through which light emitted from the backlight 21 passes through, a reflecting mirror 23 that upwardly reflects the light passing through this second lens 22, a second lens 24 through which the light reflected by the reflecting mirror 23 passes through, and a liquid crystal panel 25 of which the rear surface is illuminated with the light passing through the second lens 24 to output the display light L.

The display light L emitted from the liquid crystal panel 25 is reflected by the plane mirror 13 and the concave mirror 14 to be emitted outwardly of the case 11 after passing through the translucent cover 15. The display light L emitted outwardly of the case 11 is projected onto the front windshield of the vehicle so that the virtual image is displayed at the front of the front windshield.

The plane mirror 13 is a reflecting mirror formed with a plane reflecting surface obtained by depositing a metal such as aluminum onto a surface of a resin member such as polycarbonate (PC). The plane mirror 13 reflects the display light L emitted from the display unit 20 toward the concave mirror 14. It is configured so that the display light L is returned inside the case 11 by using the plane mirror 13, such that an optical path of the display light L from the display unit 20 to the front windshield can be made longer. As a result, the virtual image can be displayed at a further frontal area of the front windshield

The concave mirror 14 is a reflecting mirror formed with a concave reflecting surface obtained by depositing a metal such as aluminum onto a surface of a resin member such as polycarbonate. The display light L emitted to the concave mirror 14 can be enlarged by the concave mirror 14, and thus, even if the display unit 20 is made of a relatively small and inexpensive component, it is possible to display the large virtual image onto the front windshield. Further, a concave shape of the concave mirror 14 is designed to offset a distortion caused by a curved shape of the front windshield.

The translucent cover 15 is a cover made of translucent resin such as polymethyl methacrylate (PMMA). A peripheral edge of the translucent cover 15 is formed with a cover mask part 15a printed in black. The cover mask part 15a inhibits sunlight from entering into the case 11.

The lower case 30 is a case made of a resin such as polypropylene (PP). In the lower case 30, a container 31 for containing the display unit 20, an attachment part 32 for attaching the plane mirror 13, and an attachment part 33 for attaching the concave mirror 14 are formed.

The upper case 40 is a case made of a mixed resin such as polycarbonate and polyethylene terephthalate (PET). At an upper end of the upper case 40, an opening part 41 covered with the translucent cover 15 is provided. The upper case 40 is formed with a light shielding part 42 for shielding the sunlight toward the display unit 20 by blocking a part of the opening part 41. With this light shielding part 42, it is possible to prevent a phenomenon (washout phenomenon) where the virtual image cannot be viewed easily as a result of the sunlight entering the display unit 20 that outputs the display light L.

A perpendicular wall part 43 is extended downwardly from a front right end of the light shielding part 42. Further, the perpendicular wall part 43 extends in a substantially vertical direction. A boundary part 44 between the light shielding part 42 and the perpendicular wall part 43 is set to have a predetermined surface roughness of about 20 µm, by sandblasting or the like, to suppress the reflection of the sunlight.

Further, at a right end of the light shielding part 42, a perpendicular wall part 45 configuring a side wall of the upper case 40 extends toward a perpendicular direction. The perpendicular wall part 45 extends in a substantially vertical direction. Similarly to the boundary part 44, a boundary part 46 between the light shielding part 42 and the perpendicular wall part 45 is set to have a predetermined surface roughness.

The light shielding part 42 is in a curved shape with a continuously varying curvature. A top surface 42a of the light shielding part 42 is affixed with a low reflection sheet 50 that suppresses the reflection of the sunlight. The low reflection sheet 50 is a black sheet of which the surface is applied with urethane foam. It is preferable that the low reflection sheet 50 excels at heat resistance and generates less volatile gas (low outgas). An upper area at a front end of the low reflection sheet 50 is covered with the cover mask part 15a so that the inside of the case 11 cannot be viewed from outside.

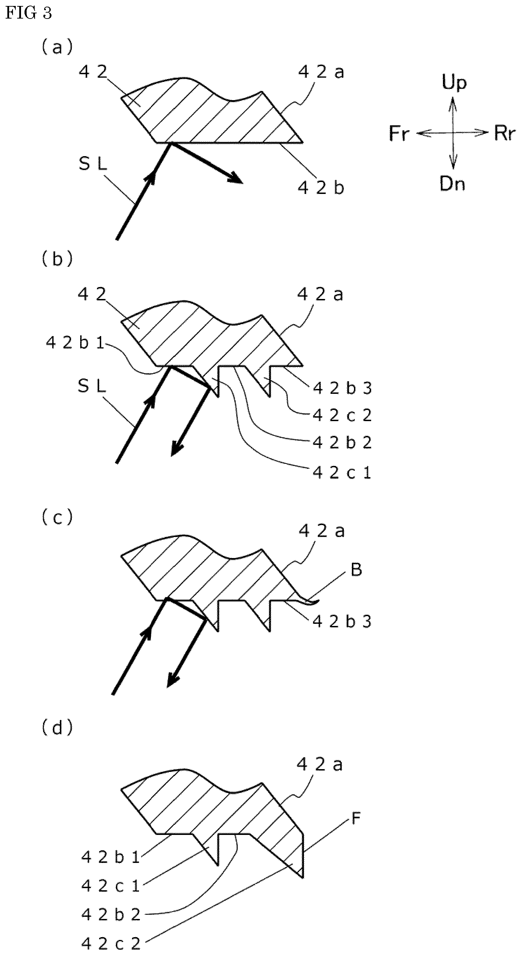

A configuration of the light shielding part 42 for preventing a washout phenomenon will be described based on an enlarged view of a main portion A of Fig. 3.

A bottom surface 42b of the conventional light shielding part 42 is a flat surface, as illustrated in Fig. 3(a). In this case, scattered light SL of the display light L emitted from the display unit 20 may enter the concave mirror 14 after being reflected by the bottom surface 42b. Therefore, the bottom surface 42b may be illuminated to be displayed, as the virtual image, on the front windshield, and thus, a marketability of the head-up display device is impaired.

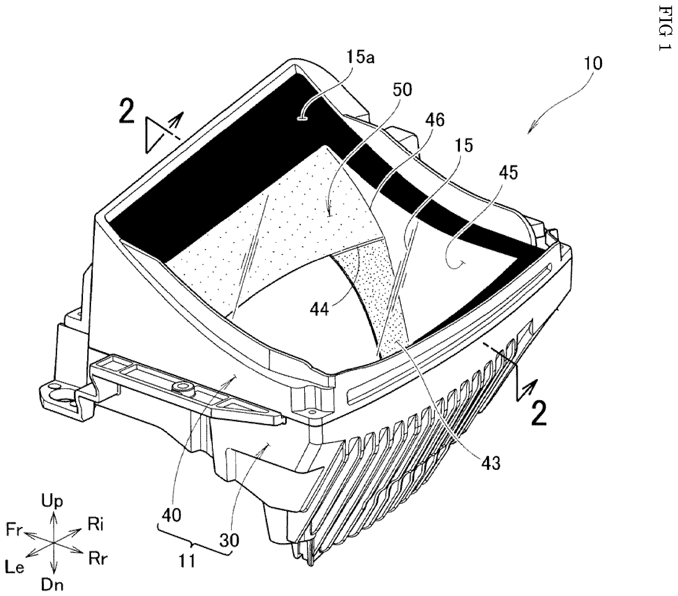

In contrast to the conventional configuration of the light shielding part 42, on the bottom surface 42b of the light shielding part 42 of the head-up display device 10, as illustrated in Fig. 3(b), a strip-shaped protrusion part 42c1 with a width of 0.5 mm and a height (in the perpendicular direction) of 0.5 mm corresponding to the bottom surface 42b1 with a width (in the front-rear direction) of 1 mm, and a strip-shaped protrusion part 42c2 with a width of 0.5 mm and a height of 0.5 mm corresponding to the bottom surface 42b2 with a width of 1 mm are arranged in a stipe shape extending along a side in a longer direction (Le - Ri direction in Fig. 1) of the bottom surface 42b. The strip-shaped protrusion part 42c1 prevents scattered light SL reflected by the bottom surface 42b1 from moving toward the concave mirror 14. Further, the strip-shaped protrusion part 42c2 prevents the scattered light SL reflected by the bottom surface 42b2 from moving toward the concave mirror 14. With the strip-shaped protrusion parts 42c1, 42c2, a possibility that the bottom surface 42 is illuminated to be displayed, as the virtual image, on the front windshield is reduced.

Further, in a configuration of the bottom surface 42b of the light shielding part 42 illustrated in Fig. 3(b), depending on a mold configuration of a resin molding, when a core is moved from a cavity of the mold, as illustrated in Fig. 3(c), a burr B may be generated at a boundary between the top surface 42a and the bottom surface 42b3. The burr B may be illuminated with the scattered light SL of the display light L and the sunlight to be displayed, as the virtual image, on the front windshield, and thus, the marketability of the head-up display device may be impaired.

Therefore, as illustrated in Fig. 3(d), it is preferable that a flat surface F of the strip-shaped protrusion part 42c2 closest to the top surface 42a side is formed continuously with the top surface 42a. With this configuration, the possibility that the burr generates is reduced.

Further, as illustrated in Fig. 3(d), it is preferable that the strip-shaped protrusion parts 42c1, 42c2 are configured to gradually increase in size as the strip-shaped protrusion parts 42c1, 42c2 are closer to the top surface 42a (farther away from the display unit 20). In this case, for example, a strip-shaped protrusion part 42c1 with a width of 0.5 mm and a height (in the perpendicular direction) of 0.5 mm corresponding to the bottom surface 42b1 with a width (in the front-rear direction) of 1 mm is arranged, and a strip-shaped protrusion part 42c2 with a width of 1.0 mm and a height of 1.0 mm corresponding to the bottom surface 42b2 with a width of 1.5 mm is arranged.

As described above, the head-up display device 10 which is one embodiment of the present invention is a head-up display device configured so that the display unit 20 for emitting the display light L is housed in the case 11 and the light shielding part 42 that blocks a part of the opening part 41 that emits the display light L is provided. In the device, the strip-shaped protrusion parts 42c1, 42c2 are formed on the bottom surface 42b of the light shielding part 42.

With this configuration, with the help of the strip-shaped protrusion parts 42c1, 42c2, it is possible to prevent a situation where the bottom surface 42b of the light shielding part 42 for preventing a washout phenomenon is illuminated with the scattered light SL of the display light L emitted from the display unit 20 and displayed as the virtual image.

The present invention is not limited to the one embodiment (including a content of the drawings). It is possible to add a modification (including omission of a composition element) to the embodiment within a range that follows a gist of the present invention.

For example, the head-up display device of the present invention can be applied to a work vehicle such as construction machinery. Further, the head-up display device of the present invention displays the virtual image by utilizing, as a projection surface, of the front windshield of the vehicle; however, in addition thereto, the head-up display may be configured to include a projection member (combiner) for projecting the display light.

Further, the light shielding part 42 of the head-up display device of the present invention is configured to be affixed with a low reflection sheet; however, in addition thereto, instead of the low reflection sheet 50, a configuration that black paint that suppresses the reflection is applied may be acceptable.

### INDUSTRIAL APPLICABILITY

The present invention is suitable to a head-up display device to be mounted on a vehicle.

### DESCRIPTION OF REFERENCE NUMERALS

- 10:: Head-up display device
- 11:: Case
- 20:: Display unit
- 41:: opening part
- 42:: light shielding part
- 42a:: Top surface (of light shielding part)
- 42b, 42c1, 42c2, 42c3:: Bottom surface (of light shielding part)
- 42c1, 42c2:: strip-shaped protrusion part (of light shielding part)
- L:: Display light

## Claims

1. A head-up display device (10), comprising: a display unit (20) for emitting display light (L) is housed in a case (11); and a light shielding part (42) that blocks a part of an opening part (41) from which the display light (L) is emitted, wherein
a bottom surface (42b) of the light shielding part (42) is formed with a strip-shaped protrusion part (42c1, 42c2)

2. The head-up display device (10) according to claim 1, wherein the strip-shaped protrusion part (42c1, 42c2) includes a flat surface (F) formed continuously with a top surface (42a) of the light shielding part (42).

3. The head-up display device (10) according to claim 1 or 2, wherein the strip-shaped protrusion part (42c1, 42c2) is formed in plural, and
the plurality of strip-shaped protrusion parts (42c1, 42c2) are formed to increase in size as the plurality of strip-shaped protrusion parts (42c1, 42c2) are farther away from the display unit (20).

## Patentansprüche

1. Head-Up-Anzeigevorrichtung (10), die Folgendes umfasst: eine Anzeigeeinheit (20) zum Ausgeben von Anzeigelicht (L), die in einem Gehäuse (11) untergebracht ist; und einen Lichtabschirmungsteil (42), der einen Teil eines Öffnungsteils (41), von dem das Anzeigelicht (L) ausgegeben wird, blockiert, wobei
eine untere Fläche (42b) des Lichtabschirmungsteils (42) mit einem streifenförmigen Vorsprungteil (42c1, 42c2) ausgebildet ist.

2. Head-Up-Anzeigevorrichtung (10) nach Anspruch 1, wobei der streifenförmige Vorsprungteil (42c1, 42c2) eine flache Fläche (F) umfasst, die durchgängig mit einer oberen Fläche (42a) des Lichtabschirmungsteils (42) ausgebildet ist.

3. Head-Up-Anzeigevorrichtung (10) nach Anspruch 1 oder 2, wobei der streifenförmige Vorsprungteil (42c1, 42c2) mehrfach ausgebildet ist, und
die mehreren streifenförmigen Vorsprungteile (42c1, 42c2) so ausgebildet sind, dass ihre Größe mit zunehmender Entfernung der mehreren streifenförmigen Vorsprungsteile (42c1, 42c2) von der Anzeigeeinheit (20) zunimmt.

## Revendications

1. Dispositif d'affichage tête haute (10), comprenant : une unité d'affichage (20) pour émettre de la lumière d'affichage (L) logée dans un boîtier (11) ; et une partie de blocage de la lumière (42) qui bloque une partie d'une partie d'ouverture (41) depuis laquelle la lumière d'affichage (L) est émise, dans lequel
une surface inférieure (42b) de la partie de blocage de la lumière (42) est formée avec une partie saillante en forme de bande (42c1, 42c2).

2. Dispositif d'affichage tête haute (10) selon la revendication 1, dans lequel la partie saillante en forme de bande (42c1, 42c2) comporte une surface plate (F) formée de manière continue avec une surface supérieure (42a) de la partie de blocage de la lumière (42).

3. Dispositif d'affichage tête haute (10) selon la revendication 1 ou 2, dans lequel la partie saillante en forme de bande (42c1, 42c2) est formée en plusieurs parties, et
la pluralité de parties saillantes en forme de bande (42c1, 42c2) sont formées de manière à augmenter de taille à mesure que la pluralité de parties saillantes en forme de bande (42c1, 42c2) sont plus éloignées de l'unité d'affichage (20).
